# EUROPEAN PATENT SPECIFICATION

(11) **EP 3 588 737 B1**
(45) Date of publication and mention of the grant of the patent: **25.11.2026**
(21) Application number: 19181919.2
(22) Date of filing: 18.12.2008
(51) Int. Cl.: H02J 50/12, H01F 38/14, H02J 7/02

(54) **WIRELESS ENERGY TRANSFER**
DRAHTLOSE ENERGIEÜBERTRAGUNG
TRANSFERT D'ÉNERGIE SANS FIL

(30) Priority: 19.12.2007 US 960072
(43) Date of publication of application: 01.01.2020
(62) Document number(s) of the earlier application(s) in accordance with Art. 76 EPC: 08862145.3 / 2 227 849
(73) Proprietor: Nokia Technologies Oy, 02610 Espoo (FI)
(72) Inventor: ELO, Harri Heikki, 00980 Helsinki (FI)
(74) Representative: Sayer, Robert David

(56) References cited:
- EP-A2- 0 609 964
- WO-A1-94/28560
- WO-A2-2004/073166
- GB-A- 2 399 228
- US-A- 5 949 155
- US-A1- 2007 145 830
- US-B2- 7 208 912

## Description

### Field of the Invention

The present invention relates to wireless energy transfer, particularly, but not exclusively, to wireless energy transfer between a supply source and a receiving component.

### Background to the Invention

It is common practice for a portable electronic device, for example a mobile telephone or a laptop computer, to be powered by a rechargeable chemical battery. Generally speaking, such a battery is releasably connected to the body of a portable device.

The use of a battery for supplying power to a portable electronic device is not ideal because the energy storage capacity of a chemical battery is limited. As such, it is necessary for the chemical battery to be recharged at regular intervals.

In order to provide a means for recharging the battery, the portable device is normally supplied with a charger unit to allow electrical energy to flow from a mains power supply to the rechargeable battery. The charger unit conventionally comprises an electrical plug for connecting to a mains power supply socket and an electrical cable for connecting the electrical plug to the portable device.

This is disadvantageous because, if there is no convenient mains power supply socket, as is the case in most outdoor and public environments, the rechargeable battery will run out of power and the portable device will need to be switched off.

The use of such a charger unit is further disadvantageous in that it requires a physical connection between the portable device and a mains power supply socket. This severely restricts the movement of the portable device during charging, thereby negating the portability of the device.

Another type of charger unit makes use of the principle of conventional, short-range inductive coupling, which involves the transfer of energy from a primary inductor in a charger unit to a secondary inductor in the portable device. Such charger units are commonly used, for example, for charging rechargeable batteries in electric toothbrushes.

Chargers utilising this type of conventional inductive coupling are able to transfer power wirelessly and hence do not require a physical connection between the mains supply and the portable device. However, the maximum distance over which effective power transfer can be achieved is limited to distances of the same order of magnitude as the physical dimensions of the inductors. For portable electronic devices, the dimensions of the inductor are limited by the size of the portable electronic device. Accordingly, in general, at distances of anything greater than a few centimetres, the efficiency of energy transfer between primary and secondary inductors is too small for this type of power transfer to be viable.

Therefore, as with the electrical cable discussed above, power transfer using conventional inductive coupling requires the charger unit and the portable device to be in very close proximity, meaning that the movement of the portable device is severely restricted.

In addition to the above problems associated with recharging, the use of a chemical battery as a power supply presents a number of further disadvantages. For example, rechargeable chemical batteries have a limited lifespan and tend to experience a decrease in their maximum storage capacity as they get older. Furthermore, chemical batteries are relatively heavy, meaning that the inclusion of a chemical battery in a portable device generally adds a significant percentage to the device's overall weight. If the device's reliance on the chemical battery could be reduced, then it would be possible for portable electronic devices such as mobile telephones to become significantly lighter.

US 2007/0145830 discloses a system and method for inductive transfer of electrical power between a substantially flat primary surface and a multitude of secondary devices in such a way that power transfer is localized to the vicinities of the individual device coils. US5949155 discloses a non-contact electric power transmission device. US 7208912 discloses inductive battery charging with peak voltage detection.

### Summary of the Invention

The invention is set forth in the claims.

This specification describes an apparatus comprising monitoring circuitry configured to monitor a resonant frequency of a supply source, a receiving component, and a control unit configured to vary a resonant frequency of said receiving component, wherein the apparatus is configured to vary the resonant frequency of said receiving component in dependence upon the resonant frequency of said supply source

The receiving component may be adapted to receive energy wirelessly from the supply source by resonant inductive coupling.

The receiving component may comprise an adaptive receiving component having a variable resonant frequency.

The apparatus may be configured to match the resonant frequency of said receiving component with the resonant frequency of said supply source.

A voltage may be induced in the receiving component by a magnetic field generated by the supply source, and the control unit may be configured to vary the resonant frequency of the receiving component to match the resonant frequency of the supply source.

The apparatus may further comprise a plurality of electrical components, and the apparatus may be configured to supply electrical energy to at least one of these electrical components.

The apparatus may further comprise a battery for supplying electrical energy to at least one of the electrical components when energy is not being received from the supply source.

The apparatus may comprise a portable electronic device. The apparatus may comprise a mobile telephone, personal digital assistant (PDA) or laptop computer.

The apparatus may comprise a phase locked loop circuit configured to output a control signal for varying the resonant frequency of the receiving component in dependence upon the resonant frequency of the supply source.

This specification further describes an apparatus comprising means for detecting a presence of a supply source, means for monitoring a resonant frequency of said supply source, and means for varying a resonant frequency of a receiving component in dependence upon the resonant frequency of said supply source.

The receiving component may be configured to receive electrical energy by wireless non-radiative energy transfer from the supply source and may be configured to supply the received electrical energy to a rechargeable battery.

This specification further describes an apparatus comprising a receiving component having variable resonance characteristics for receiving energy wirelessly from a supply source, wherein the resonance characteristics of the receiving component may be varied to match resonance characteristics of the supply source to increase the efficiency at which energy is received from the supply source.

The apparatus may further comprise monitoring circuitry for detecting and monitoring the resonance characteristics of the supply source.

The receiving component of the apparatus may comprise an adaptive receiving component having variable resonance characteristics and the apparatus may further comprise a control unit configured to automatically vary the resonance characteristics of the adaptive receiving component to match the resonance characteristics of the supply source.

The apparatus may further comprise one or more electrical components and the receiving component may be coupled to power supply circuitry to supply power to at least one of these electrical components.

The apparatus may further comprise a battery for supplying electrical energy to at least one of the electrical components when energy is not being received from the supply source.

The apparatus may comprise a portable electronic device.

The apparatus may comprise a mobile telephone, personal digital assistant (PDA) or laptop computer.

The apparatus comprise a phase locked loop circuit configured to output a control signal for varying the resonant frequency of the receiving component in dependence of the resonant frequency of the supply source.

This specification further describes a system comprising a supply source, and an apparatus comprising monitoring circuitry configured to monitor a resonant frequency of the supply source, a receiving component, and a control unit configured to vary a resonant frequency of said receiving component, wherein the apparatus is configured to vary the resonant frequency of said receiving component in dependence upon the resonant frequency of said supply source.

This specification further describes a method comprising detecting a presence of a supply source, monitoring a resonant frequency of said supply source, and varying a resonant frequency of a receiving component in dependence upon the resonant frequency of said supply source.

The method may further comprise outputting a control signal from a phase locked loop circuit for varying the resonant frequency of the receiving component in dependence upon the resonant frequency of the supply source, and matching the resonant frequency of said receiving component with the resonant frequency of said supply source.

The method may further comprise receiving energy wirelessly at the receiving component from the supply source by resonant inductive coupling.

The receiving component may comprise an adaptive receiving component having a variable resonant frequency and the method may further comprise inducing a voltage in the adaptive receiving component using a magnetic field generated by the supply source, and varying the resonant frequency of the adaptive receiving component to match the resonant frequency of the supply source.

The method may further comprise supplying electrical energy to an electrical apparatus.

The method may further comprise supplying energy to at least one component of an electrical device from a battery when energy is not being received at the receiving component from the supply source.

The method may further comprise receiving energy at the receiving component from the supply source by resonant inductive coupling, and supplying energy received by resonant inductive coupling to at least one component of an electrical device.

This specification further describes a computer program stored on a storage-medium which, when executed by a processor, is arranged to perform a method comprising detecting a presence of a supply source, monitoring a resonant frequency of said supply source, and varying a resonant frequency of a receiving component in dependence of the resonant frequency of said supply source.

### Brief Description of the Drawings

In order that the invention may be more fully understood, embodiments thereof will now be described by way of illustrative example with reference to the accompanying drawings in which:
Figure 1 is a diagram showing a flow of energy from a feeding device to a portable electronic device.
Figure 2 is a circuit diagram of primary and secondary RLC resonator circuits with coupling coefficient K.
Figure 3 is a circuit diagram of an equivalent transformer circuit for the first and second RLC resonator circuits shown in Figure 2.
Figure 4 is a circuit diagram of a reduced circuit of the equivalent transformer circuit shown in Figure 3.
Figure 5 shows the impedances of the individual components of the equivalent transformer circuit shown in Figure 3.
Figure 6 is a graphical illustration of the relationship between the efficiency of power transfer between two resonators and the difference between the resonators' resonant frequencies.
Figure 7 is an illustration of a wireless transfer of energy from a feeding device to a portable electronic device at mid-range using conventional inductive coupling.
Figure 8 is an illustration of a wireless transfer of energy from a feeding device to a portable electronic device at mid-range using resonant inductive coupling.
Figure 9 is a schematic diagram of a portable electronic device, including a reactance and monitoring circuitry.
Figure 10 is a schematic diagram showing components of a wireless power transfer apparatus in a portable electronic device.
Figure 11 is a schematic diagram showing an adaptive receiving component in a wireless power transfer apparatus of a portable electronic device.
Figure 12 is a circuit diagram showing an example set of components in a PLL ASIC comprised in a wireless power transfer apparatus of a portable device.
Figure 13 is a circuit diagram showing an example of an adaptive receiving component and a measurement coil for feeding signals to the PLL ASIC.
Figure 14 is a flow diagram showing steps associated with the initiation of wireless power transfer by resonant inductive coupling.

### Detailed Description of the Preferred Embodiments

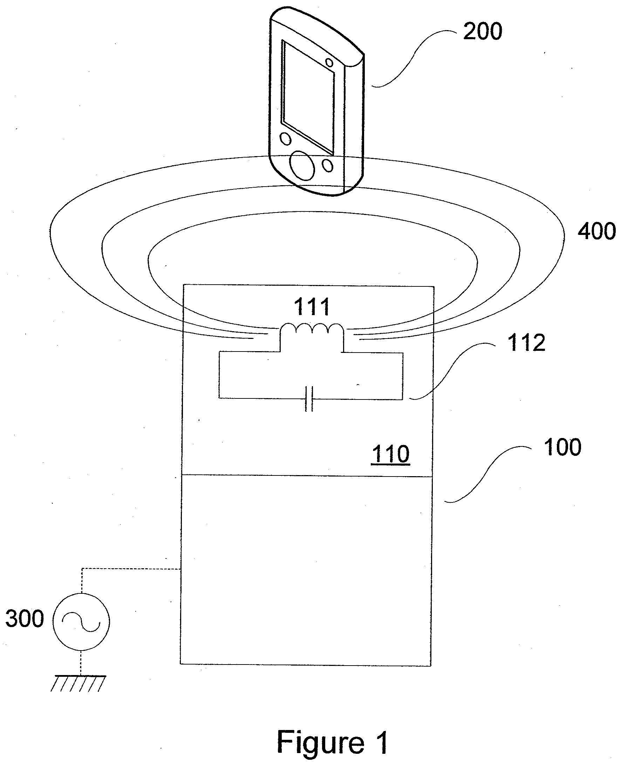

Referring to Figure 1, a feeding device 100 comprises a supply source 110 for supplying power wirelessly to a portable electronic device 200. The supply source 110 comprises a primary reactance, for example comprising a primary inductor 111, coupled to an electrical circuit 112. The electrical circuit 112 may be optionally connected to a power supply, for example comprising a mains power supply 300, for supplying electrical current to the electrical circuit 112. The primary inductor 111 has an inductance L₁₁₁, Q-factor Q₁₁₁ and resonant frequency f₀₍₁₁₁₎.

As will be understood by a skilled person, a flow of electrical current through the primary inductor 111 causes a magnetic field 400 to be created around the primary inductor 111. As is shown by Figure 1, the evanescent magnetic field 400 created around the inductor 111 penetrates the exterior of the feeding device 100, meaning that the effects of the magnetic field 400 may be experienced in the surrounding environment. For instance, the magnetic field 400 may be used to induce a voltage in a receiving component comprising a secondary reactance, such as a secondary inductor in an electrical device. This is the principle upon which wireless non-radiative energy transfer through conventional short-range inductive coupling is based. However, efficient wireless energy transfer by such conventional short-range inductive coupling is limited to distances of the same order of magnitude as the physical dimensions of the inductors involved in the energy transfer.

As is fully described below, the portable electronic device 200 is adapted to receive energy wirelessly by an alternative type of inductive coupling. This alternative type of inductive coupling will be referred to as resonant inductive coupling.

Using resonant inductive coupling, it is possible to use non-radiative energy transfer to transfer energy efficiently over longer distances than over those possible with conventional inductive coupling. This means that resonant inductive coupling provides a greater degree of freedom and flexibility than conventional inductive coupling when used for the transfer of energy. As is described in more detail below, resonant inductive coupling is based on inductive coupling between a supply source and a receiving component that contain inductors critically tuned to the same frequency. The inductor at the receiving component may tuned so as to resonate at the frequency of the supply source inductor. For example, the resonant frequency f₀ of a supply source and the resonant frequency f₀ of a receiving component may be equal to one another.

More specifically, if the resonant frequency f₀ associated with a primary reactance, for example the resonant frequency f₀₍₁₁₁₎ associated with the inductor 111 in the feeding device 100, may be equal to the resonant frequency f₀ associated with a secondary reactance, for example a receiving component comprising a secondary inductor in a portable electronic device 200, efficient wireless non-radiative energy transfer can be achieved between the primary and secondary reactances at longer ranges than is possible with conventional inductive coupling if the primary reactance is placed in a magnetic field generated around the primary reactance.

For example, wireless energy transfer with an efficiency of tens of percent may be achieved by resonant inductive coupling over distances at least one order of magnitude greater than the physical dimensions of the inductors being used for the transfer.

A general example of non-radiative wireless energy transfer between two inductors by resonant inductive coupling is given below.

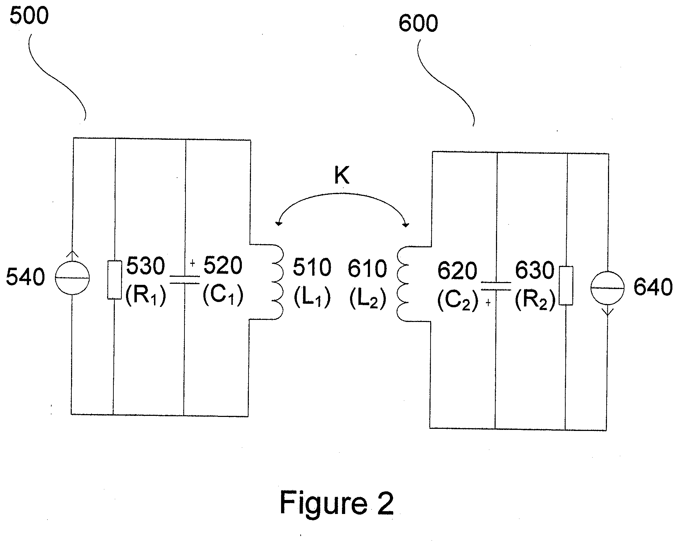

Referring to Figure 2, there are shown primary and secondary RLC resonator circuits 500, 600. The primary RLC circuit 500 comprises a first inductor (L₁) 510, a first capacitor (C₁) 520 and a first resistor (R₁) 530. The secondary RLC circuit 600 comprises a second inductor (L₂) 610, a second capacitor (C₂) 620 and a second resistor (R₂) 630. In this example, L₁= L₂ and C₁= C₂.

The primary RLC circuit 500 is connected to a power source, comprising a time-dependent current source (i_{SUPPLY}(t)) 540. The time-dependency of the current source 540 is such that the current may take the form of a sine wave, tuned to the resonant frequency f₀ of both the first and second RLC circuits 500, 600, i.e. ${f}_{0} = \frac{1}{2 π \sqrt{{L}_{1} {C}_{1}}} = \frac{1}{2 π \sqrt{{L}_{2} {C}_{2}}}$

The second RLC circuit 600 is connected to a load, represented in Figure 2 as a DC current source (i_{LOAD}) 640. The current from the DC current source 640 is zero when energy is not being transferred between the first and second RLC circuits 500, 600.

The Q-values associated with the first and second resonator circuits 500, 600 are represented by the first and second resistors 530, 630. As is explained in more detail below, the magnitude of the Q-values of the resonator circuits 500, 600 is proportional to the efficiency of energy transfer between the circuits 500, 600.

In this general example, the inductors 510, 610 are separated by a distance approximately one order of magnitude greater than the physical dimensions of the inductors 510, 610 themselves. At this range, the coupling coefficient K between the inductors 510, 610 is small, for example 0.001 or less, meaning that any attempt to transfer energy between the resonator circuits 500, 600 by conventional inductive coupling would be extremely inefficient. The value of the coupling coefficient K may be given by the equation: $K = \frac{M}{\sqrt{{L}_{1} {L}_{2}}}$ where M is the mutual inductance between the resonator circuits 500, 600. The coupling coefficient K has a minimum value of zero and a maximum value of one.

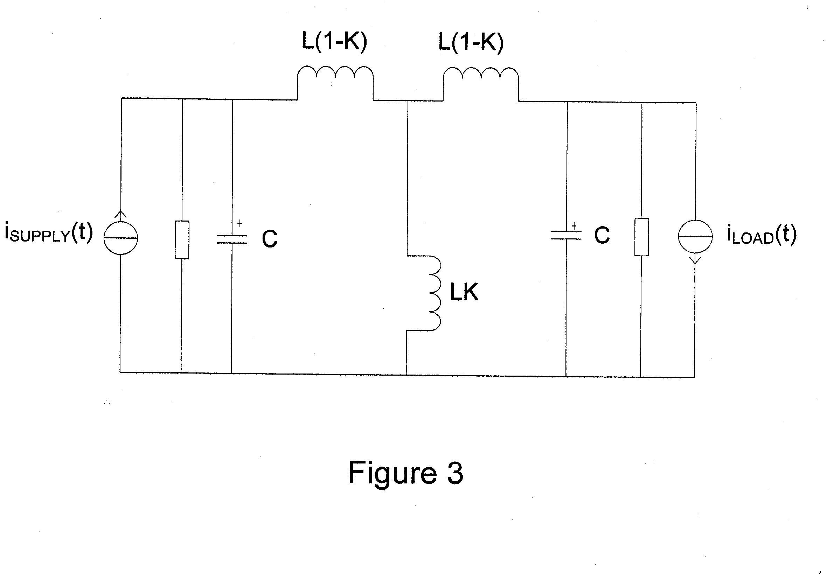

Figure 3 shows an equivalent transformer circuit for the first and second RLC resonator circuits 500, 600. When the frequency of the time-dependent current source 540 is not equal to the resonant frequency f₀ of the second RLC resonator circuit 600, the second resonator circuit is bypassed due to negligible inductance LK. As such, very little or no power is transferred to the load. However, when the conditions for resonant inductive coupling are met, this situation is reversed as is explained in the example given below.

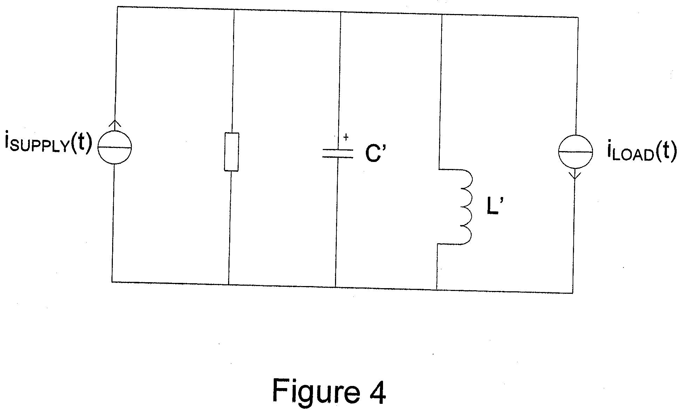

In one example of energy transfer by resonant inductive coupling, the resonant frequencies f₀ of the resonator circuits 500, 600 are equal to one another and the magnitudes of the Q-values (represented by the resistors 530, 630) of the resonator circuits 500, 600 are very high, for example one hundred or more or one thousand or more. When current is supplied by the current source 540 at the resonant frequency f₀ of: ${f}_{0} = \frac{1}{2 π \sqrt{{L}_{1} {C}_{1}}} ,$ current in the first inductor 510 causes an evanescent magnetic field to be generated in the near field around the first inductor 510. This magnetic field is experienced by the second inductor 610 and causes a current to be induced. In this way, current in the first inductor 510 is routed via the second inductor 610. Under these conditions, the inductance LK in the equivalent transformer circuit shown in Figure 3 is tuned with the secondary resonator circuit. As such, the equivalent transformer circuit shown in Figure 3 can be reduced to the circuit of a single electrical resonator, as shown by Figure 4. There is no limit on the number of secondary resonator circuits which could receive current from a primary resonator circuit in this way.

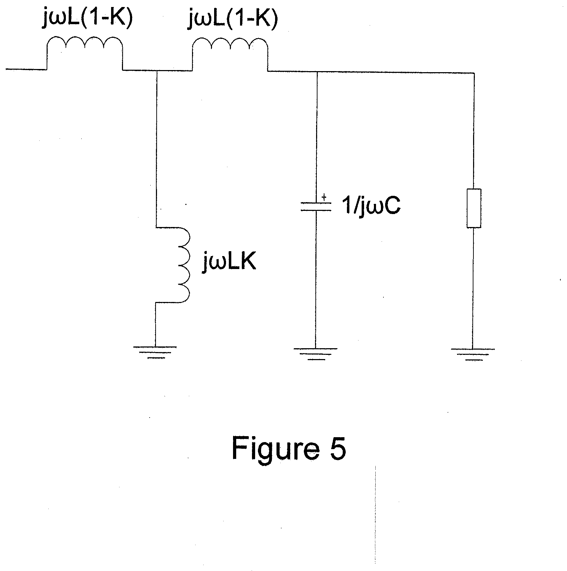

The impedances of the individual components of the equivalent transformer circuit shown in Figure 3 are shown in Figure 5. The impedance Z of the reduced circuit can thus be calculated as follows: $Z = \frac{jωLK . {Z}_{secondary}}{jωLK + {Z}_{secondary}}$

If the Q-value of the secondary resonator circuit 600 is high, Z_{secondary} may be written as: ${Z}_{secondary} = jωL \left(1-K\right) + \frac{1}{jωC}$ ∴ $\begin{matrix}Z = \frac{jωLK . \left(jωL\left(1-K\right)+\frac{1}{jωC}\right)}{jωLK + \left(jωL\left(1-K\right)+\frac{1}{jωC}\right)} \\ = \frac{jωLK . \left(jωL\left(1-K\right)-jωL\right)}{jωLK + \left(jωL\left(1-K\right)-jωL\right)} \\ = \frac{jωLK . \left(-jωLK\right)}{jωLK - jωLK}\end{matrix}$ (where 1/jωC = -jωL at resonance)
∴ |*Z*] → ∞ as the conditions for resonant inductive coupling are reached.

A secondary resonator circuit may therefore be tuned so as to receive energy by resonant inductive coupling from any primary resonator circuit.

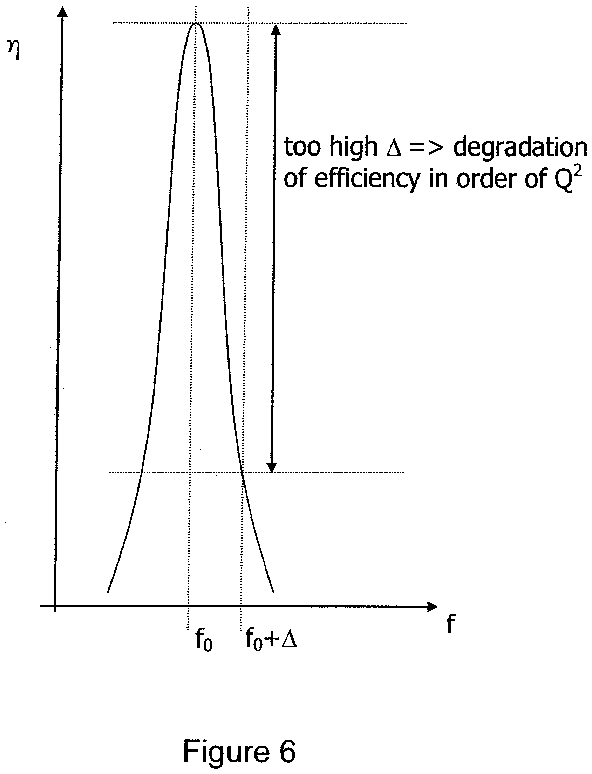

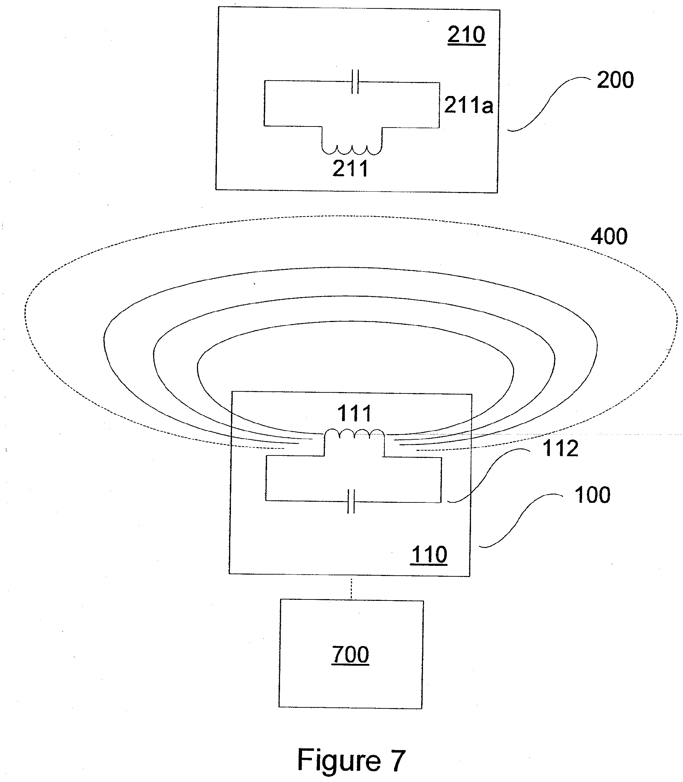

Figure 6 illustrates a general relationship between the efficiency of wireless energy transfer η through inductive coupling between primary and secondary reactances separated by a distance one order of magnitude larger than the physical dimensions of the reactances. The efficiency of wireless energy transfer η is plotted on the vertical axis using a logarithmic scale, and the difference in resonant frequency f₀ between the reactances is plotted on the horizontal axis. This relationship is applicable to, for example, non-radiative wireless energy transfer between the primary inductor 111 of the feeding device 100 and a secondary inductor 211 of a portable device 200 shown in Figure 7.

As can be seen, the efficiency of non-radiative wireless energy transfer η between the reactances is at a maximum when the resonant frequencies f₀ associated with the reactances are equal to one another. Moreover, the efficiency of wireless energy transfer η between the reactances decreases markedly as the difference between the resonant frequencies f₀ associated with the reactances increases. Accordingly, as discussed above, in order to transfer energy at the maximum possible efficiency it is preferable for the reactances to have resonant frequencies f₀ which are as close to each other as possible. Ideally, the resonant frequencies f₀ should be identical.

An optimal regime for efficient energy transfer by resonant inductive coupling may be when the condition $\frac{{K}_{12}}{\sqrt{{Γ}_{1} {Γ}_{2}}} ≫ 1$ is satisfied. Here, Γ represents the linewidth of the resonance associated with each of the first and second reactances due to intrinsic losses. The linewidth is inversely proportional to the Q factor, which is a measure of the sharpness of the resonance.

In addition, as previously discussed, the efficiency of energy transfer between primary and secondary reactances is proportional to the magnitude of the Q-values associated with the reactances; for a high efficiency of energy transfer, the magnitude of the Q-values should be large. For example, in the case of the primary and secondary inductors 111, 211 discussed above in relation to the transfer of energy from the feeding device 100 to the portable device 200, efficient energy transfer may be achieved with Q-values Q₁₁₁, Q₂₁₁ in the order of 100 or more. Furthermore, the relative difference between the resonant frequencies f₀₍₁₁₁₎, f₀₍₂₁₁₎ associated with the inductors 111, 211 should be less that the reciprocal of their associated Q-values. At relative differences greater than the reciprocal of the Q-values, the efficiency of energy transfer decreases by 1/Q².

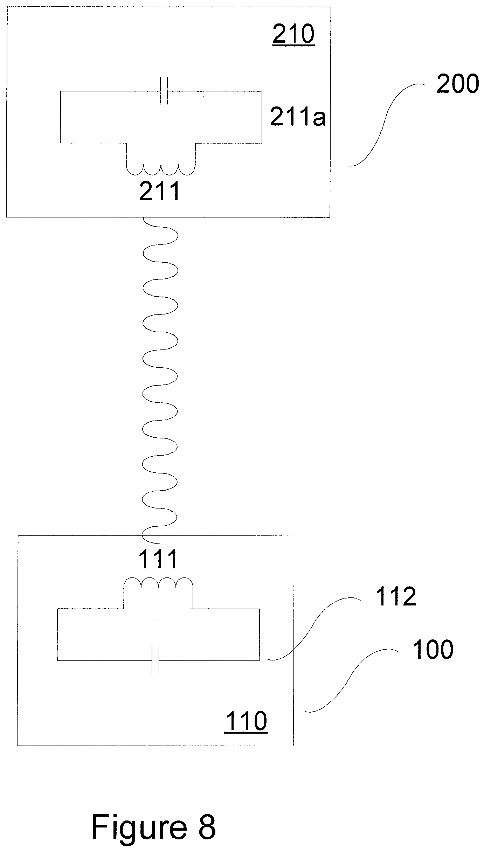

Figures 7 and 8 illustrate the difference between conventional inductive coupling and resonant inductive coupling when the distance between reactances, for example the primary and secondary inductors 111, 211, is one order of magnitude greater than the reactances' physical dimensions. Referring to Figure 7, with conventional inductive coupling, i.e. when the difference between the resonant frequencies associated with the inductors 111, 211 is outside of the limits discussed above, only a negligible amount of energy in the magnetic field 400 is passed from the primary inductor 111 to the secondary inductor 211 in the portable device 200. In contrast, referring to Figure 8, when the resonant frequencies f₀ associated with the inductors 111, 211 are matched, energy is able to tunnel by resonant inductive coupling from the primary inductor 111 in the feeding device 100 to the secondary inductor 211 in the portable electronic device 200 via the magnetic field 400.

For the purposes of simplicity and clarity, the above example discusses the transfer of energy from a primary inductor 111 to a single secondary inductor 211. However, alternatively, energy can be transferred from the primary inductor 111 to a plurality of secondary inductors 211 all being associated with the same resonant frequency f₀, potentially enabling multiple portable devices 200 to receive energy wirelessly from a single feeding device 100.

In this way, feeding devices 100 are able to supply energy to portable electronic devices 200 over mid-ranges, for example several metres, in environments in which it is not convenient to install mains power sockets. As an example, in a similar manner to the installation of wireless LANS in cafés and restaurants, a network 700 of feeding devices 100 could be installed throughout a public space to provide members of the public with a power supply for their portable electronic devices 200. Such a public space could be, for example, a café, restaurant, bar, shopping mall or library. Alternatively, feeding devices may be installed in private spaces such as, for example, the interior of a person's car or home.

In order to maximise the potential of such a network 700 of feeding devices 100, it is preferable that the feeding devices 100 have the capacity to supply energy to as many portable devices 200 as possible. One way in which this could be achieved is to implement a degree of standardization in the properties of the reactances, for example the primary and secondary inductors 111, 211, used in the feeding devices 100 and portable electronic devices 200. In particular, it would be preferable if the resonant frequency f₀ associated with the primary reactance in each feeding device 100 of the network 700 was the same. This would enable manufacturers of portable devices 200 and other electrical devices to equip their devices with secondary reactances associated with the same standardized resonant frequency f₀.

A skilled person will appreciate, however, that due to manufacturing tolerances, the mass production of inductors to a degree of accuracy in which all the inductors are associated with exactly the same resonant frequency f₀ may be difficult to achieve. This will lead to variations in both the resonant frequencies f₀ of feeding devices 100, and to variations in the resonant frequencies f₀ of portable devices 200. Furthermore, even if feeding devices 100 and portable devices 200 can be manufactured with identical resonant frequencies f₀ in free space, the resonant frequencies f₀ of each individual unit will be affected when in use by other inductors in the unit's surrounding environment. The amount by which the resonant frequency of each unit is altered will depend on the number and proximity of other inductors.

Thus, even when attempts have been made to standardize the resonant frequencies f₀ of feeding devices and portable devices, manufacturing intolerances and environmental conditions still have the potential to cause problems for energy transfer by resonant inductive coupling.

One way to alleviate this problem is to provide portable electronic devices 200 with a wireless energy transfer apparatus 210 for altering the resonant frequency f₀ associated with their secondary inductors 211 post-manufacture in dependence of the properties of a nearby feeding device 100. This provides portable electronic devices 200 with the ability to tune their inductor's resonant frequency f₀ to match the frequency of an evanescent magnetic field generated around a primary inductor 111 in a nearby feeding device 100 and thus receive energy wirelessly by resonant inductive coupling.

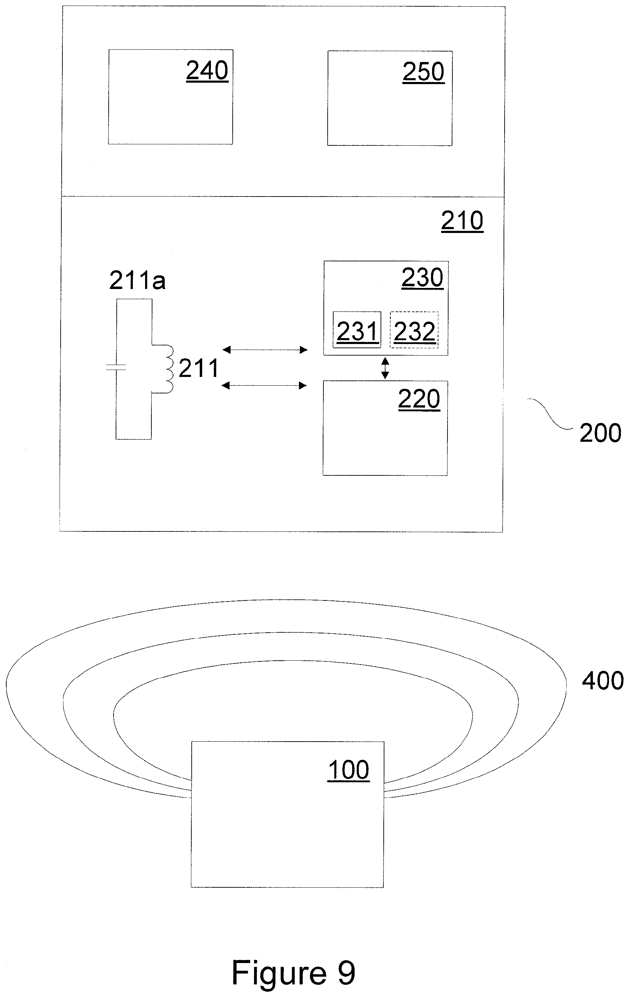

An exemplary embodiment of a portable electronic device 200 adapted to receive energy wirelessly by resonant inductive coupling is given below. Referring to Figure 9, the portable electronic device 200 comprises a wireless energy transfer apparatus 210, comprising a power supply unit (PSU), for receiving energy from a magnetic field and supplying electrical energy to electrical components 240 of the portable device 200. Alternatively, as discussed below, electrical energy may be supplied to a rechargeable chemical battery 250 of the portable electronic device 200.

In the example discussed below, the magnetic field will be referred to in the context of the magnetic field 400 created by current flowing through the primary inductor 111 in a feeding device 100. However, a skilled person will appreciate that the magnetic field could alternatively correspond to a magnetic field created by another feeding device, or any other suitable magnetic field source.

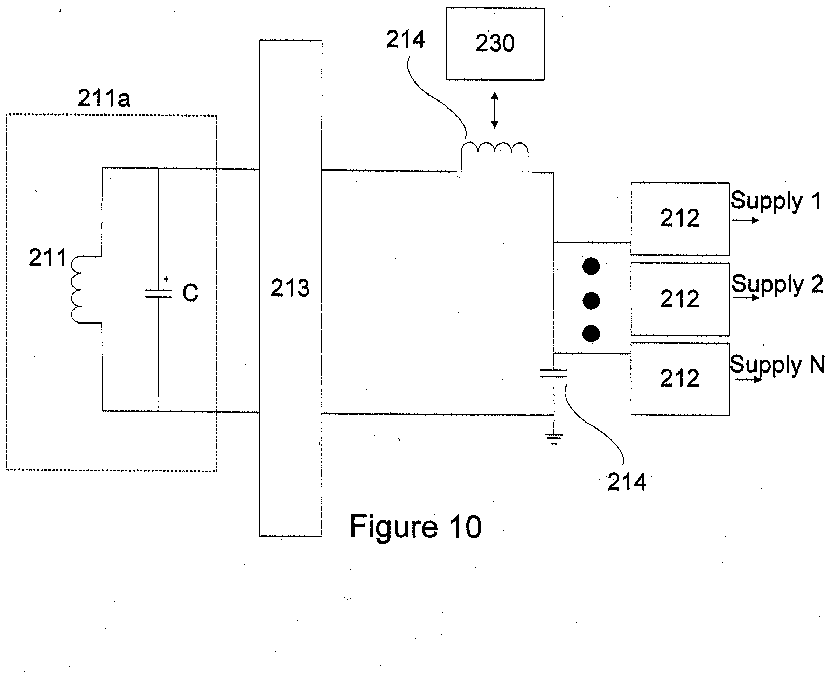

The wireless energy transfer apparatus 210 may be controlled by a microcontroller 220 integrated into the energy transfer apparatus 210 and may comprise a receiving component 211a, comprising at least one reactance, for receiving energy wirelessly by non-radiative energy transfer from the magnetic field 400 by resonant inductive coupling. More specifically, as discussed above, a voltage may be induced in the receiving component 211a by the magnetic field 400 generated around the primary inductor 111 by an AC voltage applied across the primary inductor 111 at the supply source 110. When the receiving component 211a is coupled to a load in the portable electronic device, electrical power is transmitted from the supply source to the load. Such a load may comprise at least one switch mode power supply, as described with reference to Figure 10. In this example, the receiving component 211a comprises a secondary inductor 211. The secondary inductor 211 is associated with an inductance L₂₁₁, Q-factor Q₂₁₁ and resonant frequency f₀₍₂₁₁₎.

The wireless energy transfer apparatus 210 may further comprise monitoring circuitry 230 configured to detect a magnetic field 400 created around the primary inductor 111 in the feeding device 100, as is described in more detail below. Upon detecting the magnetic field 400, the monitoring circuitry 230 and microcontroller 220 may be further configured to detect and monitor the resonant frequency f₀₍₁₁₁₎ associated with the primary inductor 111.

The features of the monitoring circuitry 230 allow the portable device 200 to wirelessly receive energy over mid-range distances, for example distances at least one order of magnitude greater than the physical dimensions of the primary and secondary inductors 111, 211.

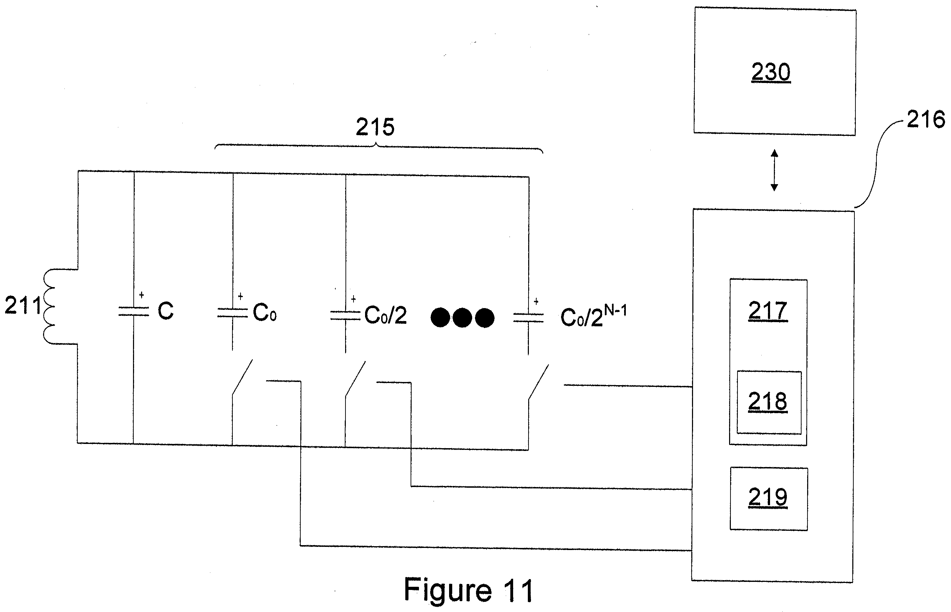

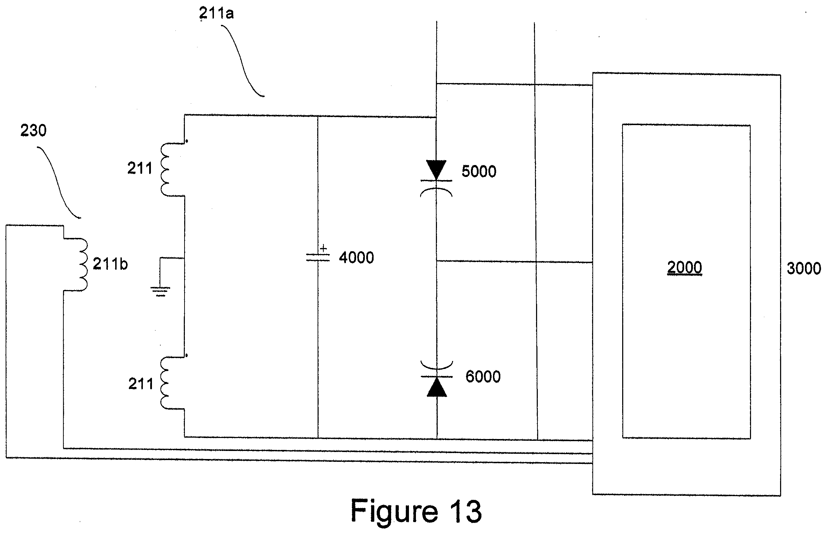

Referring to Figure 10 in combination with Figure 9, in one example the receiving component 211a of the wireless energy transfer apparatus 210 has a parasitic capacitance C and is connected to a plurality of switched-mode power supplies (SMPSs) 212 via a diode-bridge 213 and LC filter 214. Although the receiving component is shown in Figure 10 as comprising a single secondary inductor 211, the receiving component 211a is adaptive and may be coupled to or comprise additional components for varying the resonant frequency. Examples of such components are shown in Figures 11 and 13. The purpose of the LC filter 214 is to ensure that a constant reactive load is introduced to the secondary inductor 211. If the inductor 211 were to be loaded resistively, there would be a significant decrease in the Q-value Q₍₂₁₁₎ associated with the inductor 211, which would in turn significantly reduce the efficiency of the transfer of energy from the feeding device 100, as previously discussed.

The diode-bridge 213 and LC filter 214 also protect the inductor 211 from direct exposure to the strongly time-varying load presented by the SMPSs 212, which are configured to supply power received by resonant inductive coupling from the magnetic field 400 to various circuits of the portable electronic device 200. The SMPSs 212 may be configured, for example, to supply power to a rechargeable chemical battery 250 of the portable electronic device 200, as shown in Figure 9, for recharging.

Alternatively the SMPSs 212 may be configured to supply power directly to electrical components 240 of the portable electronic device 200, with the chemical battery 250 acting as a reserve power source. For example, the chemical battery 250 may be configured only to supply power to electrical components 240 of the portable electronic device 200 when the wireless energy transfer apparatus 210 is not receiving power by resonant inductive coupling. If feeding devices 100 were to become widespread, the inclusion of the rechargeable battery 250 in the portable device 200 could become unnecessary.

Figure 11 shows an example of an adaptive receiving component 211a. The resonance characteristics of the adaptive receiving component 211a can be tuned to match the resonance characteristics associated with the primary inductor 111 in the feeding device 100. An adaptive receiving component of this type provides the degree of tuneability necessary for the resonant frequency f₀₍₂₁₁₎ of the receiving component 211a to be varied, should the resonant frequency f₀₍₂₁₁₎ not be identical to that associated with the primary inductor 111 in the feeding device 100.

In one example, as is shown by Figure 11, the receiving component 211a comprises at least one secondary inductor 211 optionally coupled to an array of capacitors 215. Each capacitor 215 may have a different capacitance to each of the others. For example, as shown by Figure 11, the capacitors 215 may comprise N capacitors with capacitances C₀, C₀/2,...C₀/2^{N-1}. Each of the capacitors 215 may be optionally coupled to the secondary inductor 211 to affect the capacitance C₂₁₁ of the receiving component 211a, thereby varying the resonant frequency f₀₍₂₁₁₎ associated with the inductor 211. The connection and disconnection of the capacitors 215 to the secondary inductor 211 provides a mechanism by which the resonant frequency of the receiving component 211a can be varied to match the frequency of the transmitting primary inductor and thus receive energy by resonant inductive coupling. The portable device 200 can therefore match the resonant frequency f₀₍₂₁₁₎ associated with the secondary inductor 211 with the resonant frequency f₀₍₁₁₁₎ associated with the primary inductor 111 in the feeding device 100. It will be appreciated that the resonant frequency f₀₍₂₁₁₎ associated with the secondary inductor 211 could alternatively be varied by altering the inductance of the receiving component 211a.

In this implementation, as is shown by Figure 11, the array of capacitors 215 is coupled to a control unit 216 in the microcontroller 220 for automatically controlling the capacitance C₂₁₁ of the receiving component 211a in dependence of a control signal from the monitoring circuitry 230. The microcontroller 220 may comprise a memory and signal processing means 217, for example including a microprocessor 218, configured to implement a computer program for detecting and monitoring the resonant frequency associated with the primary inductor 111 through the monitoring circuitry 230 and analysing the control signal from the monitoring circuitry 230 to cause the resonant frequency the resonant frequency associated with the secondary inductor 211 to be varied by connection and disconnection of the individual capacitors in the capacitor array 215.

In this way, the control unit 216 is able to adapt the resonant frequency f₀₍₂₁₁₎ of the receiving component 211a to make it equal to the resonant frequency f₀₍₁₁₁₎ associated with the primary inductor 111, thereby initiating resonant inductive coupling between the primary inductor 111 and the secondary inductor 211.

The monitoring circuitry 230 may be coupled to an output from the LC filter 214 to detect when a voltage is being induced in the secondary inductor 211 and thus to detect when the portable electronic device 200 is in the presence of a magnetic field 400. For example, the output of the LC filter 214 may be coupled to an input of an AD converter 231, which may be integrated into the monitoring circuitry 230, for sensing a voltage induced in the secondary inductor 211 and for supplying a representative signal to the microcontroller 220 for calculating the resonant frequency associated with the primary inductor 111. The resonant frequency associated with the secondary inductor 211 may then be varied by varying the resonant frequency of the adaptive receiving component 211a to match the calculated resonant frequency of the primary inductor 111.

Alternatively, as shown by Figure 9, the monitoring circuitry 230 may comprise a separate coil 232 for supplying induced voltage signals to the AD converter 231.

The monitoring circuitry 230 may be sensitive to very small voltages induced in the secondary inductor 211, for example of the order of microvolts, and may be configured such that it is able to detect a magnetic field 400 even when the receiving component 211a is in a detuned state. The monitoring circuitry 230 is thus able to detect the presence of a primary inductor 111 even when then the resonant frequency f₀₍₁₁₁₎ associated with the primary inductor 111 is not equal to the resonant frequency f₀₍₂₁₁₎ set for the secondary inductor 211 in the portable electronic device 200.

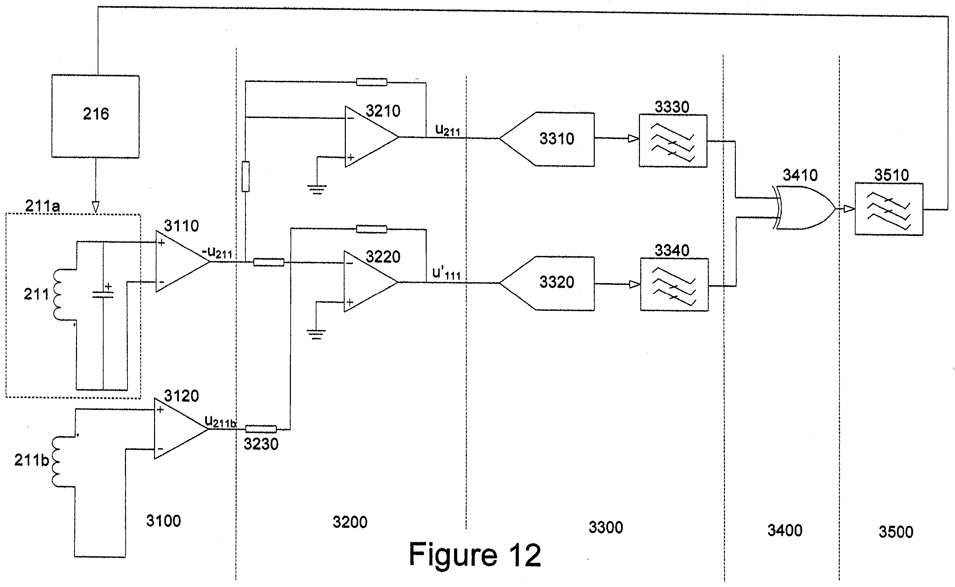

Referring to Figures 12 and 13, in one example, the monitoring circuitry 230 is comprised in an application specific integrated circuit (ASIC) 3000 for varying the resonant frequency f₀₍₂₁₁₎ of an adaptive receiving component 211a in dependence of the resonant frequency f₀₍₁₁₁₎ of a supply source 110 comprising a primary inductor 111. In this example, the receiving component 211a may comprise at least one secondary inductor 211, and the monitoring circuitry may comprise a measurement coil 211b. The measurement coil 211b may be external to the ASIC 3000. The measurement coil 211b may have a high impedance value, such that current in the measurement coil 211b is negligible even when the measurement coil 211b is in the presence of a field 400 from a supply source 110. The time varying voltage u_{211b} induced in the measurement coil 211b by a magnetic field generated around a primary inductor 111 in a supply source 110 may be written as follows: ${u}_{211 b} \left(t\right) = {L}_{211 b} \left[\frac{{K}_{211 b - 111} . {u}_{111} \left(t\right)}{{L}_{111}}+\frac{{K}_{211 b - 211} . {u}_{211} \left(t\right)}{{L}_{211}}\right]$ where Kₙ₋ₘ represents the coupling coefficients between the measurement coil (n) 211b and the primary and secondary inductors (m) 111, 211.

Rearrangement of this equation allows the time varying voltage u_{211b} measured in the measurement coil 211b to be used to calculate the unknown phase of the time varying voltage u₁₁₁ at the primary inductor 111 in the supply source 110, as follows: ${u}_{111}^{′} = {u}_{111} \left[\frac{{L}_{211 b} {K}_{211 b - 111}}{{L}_{111}}\right] = {u}_{211 b} - {u}_{211} \left[\frac{{L}_{211 b} {K}_{211 b - 111}}{{L}_{211}}\right]$ where the phase of u'₁₁₁ is the same as the phase of the voltage u₁₁₁ at the supply source 110.

The inductance values L₂₁₁ and L_{211b} of the secondary inductor 211 and measurement coil 211b may be measured at the time of manufacture of the portable device 200. As such, by measuring the coupling coefficient K_{211b-211} between the secondary inductor 211 and the measurement coil 211b (e.g. during manufacture of the portable device 200), the phase of the time varying voltage signal u₁₁₁ at the supply source 110 may be calculated at the portable device 200 despite there being no physical connection between the portable device 200 and the supply source 110. The phase of the voltage signal u'₁₁₁ may then be used to adjust the resonant frequency of the receiving component 211a as described in more detail below. Once measured, the coupling coefficient K_{211b-211} between the secondary inductor 211 and the measurement coil 211b may be stored, for example, in non-volatile memory in the portable device 200 and may be recalled when the portable device 200 is in use.

The voltage signals induced at the secondary inductor 211 and measurement coil 211b due to interaction with the magnetic field 400 may be input to a phase comparator in the portable device 200, which is configured to compare the phase of the voltage u'₁₁₁ (equivalent to the phase of the voltage at the supply source 110) with the phase of the voltage u₂₁₁ at the secondary inductor 211. The phase difference between the voltage signals may be used to adjust the resonant frequency of the receiving component 211a in dependence of the resonant frequency associated with a primary inductor 111 in a supply source 110. This is described in more detail below.

Referring to Figures 12 and 13, the portable device 200 may comprise a phase comparator which is part of a phase locked loop (PLL) circuit 2000. The PLL circuit 2000 may be part of the monitoring circuitry 230. The PLL circuit 2000 may be implemented in the application specific integrated circuit 3000, and may be coupled to the control unit 216 for supplying a control signal to the control unit 216 to cause the resonant frequency f₀₍₂₁₁₎ of the receiving component 211a to be varied in dependence of the resonant frequency of the supply source 110. The PLL circuit 2000 allows the resonant frequency of the receiving component 211a to be tuned to match the resonant frequency of the supply source 110 and to be varied in response to any variation in the resonant frequency of the supply source 110. In one example, the control unit 216 is implemented in the ASIC 3000.

As shown in Figure 12, the ASIC 3000 comprises five functional blocks 3100, 3200, 3300, 3400, 3500. The first block 3100 comprises first and second differential amplifiers 3110, 3120 configured to measure the voltages u₂₁₁, u_{211b} induced at the secondary inductor 211 and the measurement coil 211b respectively by a magnetic field 400 generated around the primary inductor 111. The second block 3200 comprises third and fourth differential amplifiers 3210, 3220, which are connected to receive the outputs from the first and second differential amplifiers 3110, 3120. The third and fourth differential amplifiers 3210, 3220 are configured to output the time varying voltage u₂₁₁ at the secondary inductor 211 and the time varying voltage u'₁₁₁ respectively. The voltage u'₁₁₁ is equivalent in phase to the voltage u₁₁₁ at the supply source 110.

At the third block 3300, the signals from the third and fourth differential amplifiers 3210, 3220 are fed to first and second analogue to digital converters (ADC) 3310, 3320, followed by first and second high pass filters 3330, 3340. This strips the DC component from the signal.

The fourth block 3400 comprises the phase comparator 3410, which in this example comprises an exclusive OR gate connected to receive at its inputs the most significant bit (MSB) from each of the high pass filters 3330, 3340. At resonance, e.g. when the resonant frequency f₀₍₂₁₁₎ of the receiving component 211a is equal to the resonant frequency f₀₍₁₁₁₎ of a supply source 110, the phase difference between the voltage u₂₁₁ at the secondary inductor 211 and the voltage u₁₁₁ at the supply source 110 may be π/2. Therefore, at resonance, the output of the exclusive OR gate 3410 may be high for half of each cycle (i.e. the duty cycle is 50%). This is a convenient equilibrium condition.

The fifth block 3500 comprises a low pass filter 3510, which is connected to receive the output from the phase comparator 3410 at its input and to output a control signal to the control unit 216 for controlling the value of the capacitance of the receiving component 211a, thereby varying the resonant frequency f₀₍₂₁₁₎ of the receiving component 211a in dependence of the resonant frequency of the supply source 110.

For the purposes of clearly showing the components of the PLL circuit 3000, Figure 12 shows the adaptive receiving component as comprising a single inductor and capacitor. However, the structure of the adaptive receiving component 211a may include or correspond to the receiving components shown in Figures 11 and 13. The receiving component may comprise or be coupled to additional components for varying the resonant frequency. Examples of such components are shown in Figures 11 and 13. Furthermore, for the purposes of clarity in Figures 11 to 13, the couplings between the receiving components 211a and the switched mode power supplies 212 have been omitted. However, it will be appreciated that the receiving components 211a shown in Figures 11 to 13 may be coupled to one or more switched mode power supplies 212 for supplying power to electrical components of the portable electronic device, for example as shown in Figure 10.

In one example, during manufacture of the portable device 200, the input impedance of the second block 3200 is adjusted such that the output of the differential amplifiers 3210, 3220 in the second block 3200 is negligible in the absence of a field 400 from a supply source 110. This may be achieved, for example, by integrating a variable impedance component 3230 as shown in Figure 12 and setting the value of the variable impedance component 3230 to ensure that the output of the differential amplifier 3210 is negligible in the absence of a field 400. The value of the variable impedance component 3230 may be set during manufacture or testing of the portable device 200, for example using conductive mode stimulus. The optimal input impedance value for the variable impedance component 3230 may be stored in non volatile memory for later use.

The inclusion of the variable impedance component eliminates the component of the phase difference between u'₁₁₁ and u₂₁₁ which is due to the factor: $\frac{{L}_{211 b} {K}_{211 b - 111}}{{L}_{111}} ,$ where ${u}_{111}^{′} = {u}_{111} \left[\frac{{L}_{211 b} {K}_{211 b - 111}}{{L}_{111}}\right]$ and thus reduces the probability of the PLL being driven towards a false equilibrium state.

The component of the phase difference arising due to this factor (described below as an "apparent" component in the phase difference) varies due to manufacturing tolerances etc. in the components of the relevant circuits. Eliminating this "apparent" component of the phase difference prevents synchronisation of the PLL from being impaired and thus also prevents the PLL circuit from being driven towards a false equilibrium.

Referring to Figure 13, the receiving component 211a may comprise a pair of secondary inductors 211 coupled to a fixed value capacitor 4000 and first and second varactor diodes 5000, 6000. Alternatively, the pair of secondary inductors 211 may be replaced by a single inductor 211 having two symmetrical portions and a centre tap between the portions. The first and second varactor diodes 5000, 6000 are coupled to receive a control signal from the PLL circuit 2000 (e.g. via the control unit 216) and are configured such that the capacitance of the varactor diodes 5000, 6000 varies in response to the output of the PLL circuit 2000. The use of varactor diodes 5000, 6000 provides a means of introducing a continuous range of potential capacitance values for the receiving component 211a, and thus a means of varying the resonant frequency of the receiving component 211a in dependence of the resonant frequency of the supply source 110. Furthermore, the use of varactor diodes 5000, 600 provides an inexpensive and compact means for varying the capacitance of the receiving component 211a. As shown in Figure 13, this implementation of the receiving component 211a is symmetrical with respect to ground, or a reference potential.

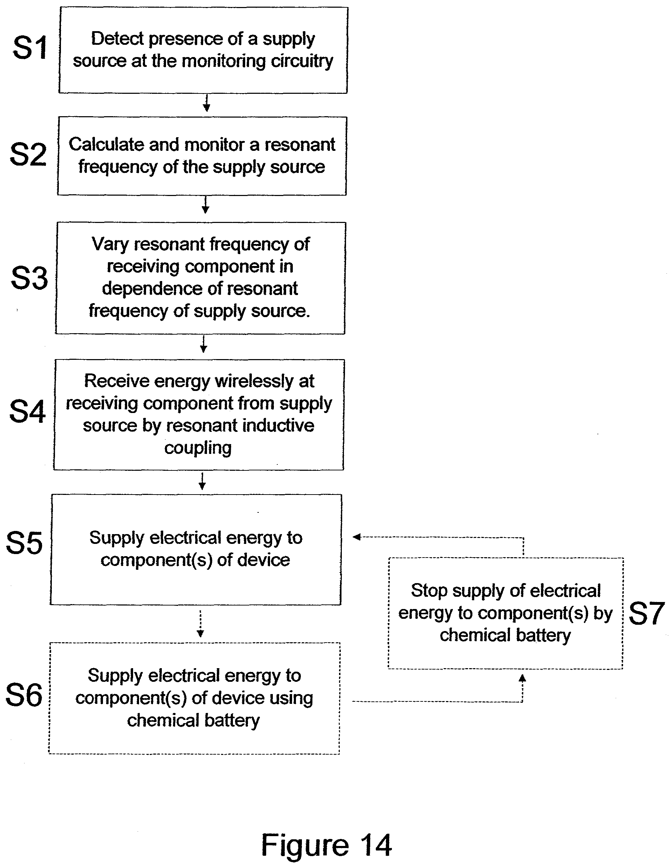

As shown by Figure 14, the wireless energy transfer apparatus 210 may include a memory 219 for storing frequency values corresponding to resonant frequencies f₀ in different environments, such that the resonant frequency associated with the secondary inductor 211 can be automatically adjusted upon the portable electronic device 200 entering a particular environment. For example, such automatic adjustment could be prompted by a control signal, received through an aerial of the portable device 200, indicating that the device 200 has entered a familiar environment. The memory 219 may also be suitable for storing tuning values between various life cycle states. The memory 219 may comprise non-volatile memory in order that the various resonant frequency values f₀ stored in the memory 219 are not lost when the device 200 is switched-off.

Steps associated with the initiation of a wireless energy transfer between a supply source 110, for example comprising a primary inductor 111, and the portable electronic device 200 in the manner described above are shown in Figure 12.

Referring to Figure 14, as described above, the first step S1 is to detect the presence of the supply source 110 by detecting the presence of its associated magnetic field 400 from an induced voltage at the monitoring circuitry 230. The supply source 110 may comprise a primary inductor 111 in a feeding device 100. The second step S2 is to calculate and monitor the resonant frequency of the supply source 110, and the third step S3 is vary the resonant frequency of the receiving component 211a, comprising the secondary inductor 211, in dependence of the resonant frequency of the supply source 110. In order to initiate wireless energy transfer with the highest possible efficiency, the third step S3 involves matching the resonant frequency of the receiving component 211a with the resonant frequency of the supply source 110. Upon completing these steps, the fourth step S4 is to receive energy wirelessly from the supply source 110 at the receiving component 211a by resonant inductive coupling, and the fifth step S5 is to supply the energy to one or more components 240 of the portable device 200.

If wireless energy transfer between the supply source 110 and portable device 200 stops, for example because the portable device 200 moves out of range, then, as described above, the chemical battery 250 may be configured to supply electrical energy to the components 240 of the portable device 200 in step S6. As shown by Figure 12, in step S7, the supply of electrical energy from the battery 250 is ceased when wireless energy transfer by resonant inductive coupling is reinitiated.

The above example discusses the use of an adaptive receiving component 211a to vary the resonant frequency associated with the secondary inductor 211 in a portable electronic device 200 so as to match the resonant frequency associated with the secondary inductor 211 to a detected resonant frequency associated with a primary inductor 111 in a feeding device 100. However, it will be appreciated that an adaptive component could alternatively be employed in a feeding device 100 so as match the resonant frequency associated with a primary inductor in the feeding device 100 to that of a secondary inductor in a portable electronic device.

For example, a portable electronic device 200 may be configured to supply a control signal to a feeding device 100 in order to supply the feeding device 100 with the resonance characteristics of the secondary inductor in the portable electronic device. The feeding device 100 would then be able to match the resonant frequency associated with its primary inductor to the resonant frequency associated with the secondary inductor in the portable device 200, thereby initiating wireless energy transfer by resonant inductive coupling.

In another alternative, the supply source of a feeding device may comprise a primary inductor driven by an amplifier, and the microcontroller of the portable electronic device may be configured to match a resonant frequency of the adaptive receiving component to a detected frequency of a magnetic field associated with the supply source.

In the examples discussed above, the portable device 200 comprises a mobile telephone or PDA. However, it will be appreciated that the portable device may alternatively comprise any number of other devices, for example a laptop computer or digital music player. It will further be appreciated that the invention is not limited to the supply of power to portable electronic devices, but may be used for powering a wide variety of other electrical devices. For example, a network of feeding devices may be installed in the home for supplying power to electric lamps and other household appliances. The above-described embodiments and alternatives may be used either singly or in combination to achieve the effects provided by the invention, within the scope of the appended claims.

## Claims

1. An apparatus (200) for receiving energy wirelessly from a supply source (110) by electromagnetic field coupling, the apparatus comprising:
a receiving component adapted to receive energy wirelessly from the supply source by electromagnetic field coupling; and
means configured to:
monitor a resonant frequency of a supply source and output a control signal;
calculate the resonant frequency of the supply source based on the control signal; and
vary a resonant frequency of the receiving component in dependence upon the control signal to match the resonant frequency of said receiving component to the calculated resonant frequency of said supply source.

2. The apparatus according to claim **1,** wherein the receiving component comprises at least one inductor.

3. The apparatus according to claim 1 or claim 2, wherein the means configured to monitor the resonant frequency of the supply source comprises a measurement coil.

4. The apparatus according to any preceding claim, wherein the means configured to monitor and calculate the resonant frequency of the supply source comprises a phase locked loop (PLL) circuit.

5. The apparatus according to any preceding claim, wherein the apparatus comprises a portable electronic device, such as a mobile telephone, personal digital assistant, PDA, or laptop computer.

6. The apparatus according to any preceding claim, wherein the receiving component is configured to supply the received electrical energy to a rechargeable battery.

7. An apparatus according to any preceding claim, wherein the apparatus further comprises a plurality of electrical components, and the apparatus is configured to supply electrical energy to at least one of these electrical components.

8. An apparatus according to claim 7, further comprising a battery for supplying electrical energy to at least one of the electrical components when energy is not being received from the supply source.

9. An apparatus according to any preceding claim, wherein the receiving component comprises an adaptive receiving component having a variable resonant frequency.

10. A method for receiving energy wirelessly by an electrical device from a supply source by electromagnetic field coupling, the method comprising:
monitoring (S2), by the electrical device, a resonant frequency of the supply source and outputting a control signal;
calculating the resonant frequency of the supply source based on the control signal; and
varying (S3), by the electrical device, a resonant frequency of a receiving component of the electrical device in dependence upon the control signal to match the resonant frequency of said receiving component to the calculated resonant frequency of said supply source.

11. The method of claim 10, wherein the receiving component receives energy wirelessly from the supply source by electromagnetic field coupling, the receiving component comprising at least one inductor.

12. The method of claim 10 or claim 11, further comprising:
supplying energy received by electromagnetic field coupling to at least one component of the electrical device; and
supplying energy to at least one component of the electrical device from a rechargeable battery when energy is not being received at the receiving component from the supply source.

13. An apparatus (200) for receiving energy wirelessly from a supply source (110) by electromagnetic field coupling, the apparatus comprising:
monitoring circuitry (230) configured to monitor a resonant frequency of the supply source and to output a control signal;
calculating the resonant frequency of the supply source based on the control signal;
a receiving component (211a) adapted to receive energy wirelessly from the supply source; and
a control unit (216) configured to vary a resonant frequency of said receiving component in dependence upon the control signal from said monitoring circuitry to match the resonant frequency of said receiving component to the calculated resonant frequency of said supply source.

14. An apparatus (100) for supplying energy wirelessly to an electronic device (200) by electromagnetic field coupling, the apparatus comprising means for:
receiving, from the electronic device, a control signal, wherein the control signal comprises the resonant frequency of the electronic device; and
adaptively varying, according to the resonant frequency of an electronic device, a resonant frequency of the apparatus to match the resonant frequency of the electronic device.

## Patentansprüche

1. Vorrichtung (200) zum drahtlosen Empfangen von Energie von einer Versorgungsquelle (110) durch elektromagnetische Feldkopplung, wobei die Vorrichtung umfasst:
eine Empfangskomponente, die ausgebildet ist, um Energie drahtlos von der Versorgungsquelle durch elektromagnetische Feldkopplung zu empfangen; und
Mittel, die dazu konfiguriert sind:
eine Resonanzfrequenz einer Versorgungsquelle zu überwachen und ein Steuersignal auszugeben;
die Resonanzfrequenz der Versorgungsquelle auf Grundlage des Steuersignals zu berechnen; und
eine Resonanzfrequenz der Empfangskomponente in Abhängigkeit von dem Steuersignal zu variieren, um die Resonanzfrequenz der Empfangskomponente an die berechnete Resonanzfrequenz der Versorgungsquelle anzupassen.

2. Vorrichtung nach Anspruch 1, wobei die Empfangskomponente mindestens einen Induktor umfasst.

3. Vorrichtung nach Anspruch 1 oder Anspruch 2, wobei die Mittel, die dazu konfiguriert sind, die Resonanzfrequenz der Versorgungsquelle zu überwachen, eine Messspule umfassen.

4. Vorrichtung nach einem der vorhergehenden Ansprüche, wobei die Mittel, die dazu konfiguriert sind, die Resonanzfrequenz der Versorgungsquelle zu überwachen und zu berechnen, eine Phasenregelkreisschaltung (PLL) umfassen.

5. Vorrichtung nach einem der vorhergehenden Ansprüche, wobei die Vorrichtung ein tragbares elektronisches Gerät umfasst, wie etwa ein Mobiltelefon, einen persönlichen digitalen Assistenten, PDA, oder einen Laptop-Computer.

6. Vorrichtung nach einem der vorhergehenden Ansprüche, wobei die Empfangskomponente dazu konfiguriert ist, die empfangene elektrische Energie einer wiederaufladbaren Batterie zuzuführen.

7. Vorrichtung nach einem der vorhergehenden Ansprüche, wobei die Vorrichtung ferner eine Mehrzahl von elektrischen Komponenten umfasst, und die Vorrichtung dazu konfiguriert ist, elektrische Energie mindestens einer dieser elektrischen Komponenten zuzuführen.

8. Vorrichtung nach Anspruch 7, ferner umfassend eine Batterie zum Zuführen von elektrischer Energie zu mindestens einer der elektrischen Komponenten, wenn keine Energie von der Versorgungsquelle empfangen wird.

9. Vorrichtung nach einem der vorhergehenden Ansprüche, wobei die Empfangskomponente eine adaptive Empfangskomponente mit einer variablen Resonanzfrequenz umfasst.

10. Verfahren zum drahtlosen Empfangen von Energie durch ein elektrisches Gerät von einer Versorgungsquelle durch elektromagnetische Feldkopplung, wobei das Verfahren umfasst:
Überwachen (S2), durch das elektrische Gerät, einer Resonanzfrequenz der Versorgungsquelle und Ausgeben eines Steuersignals;
Berechnen der Resonanzfrequenz der Versorgungsquelle auf Grundlage des Steuersignals; und
Variieren (S3), durch das elektrische Gerät, einer Resonanzfrequenz einer Empfangskomponente des elektrischen Geräts in Abhängigkeit von dem Steuersignal, um die Resonanzfrequenz der Empfangskomponente an die berechnete Resonanzfrequenz der Versorgungsquelle anzupassen.

11. Verfahren nach Anspruch 10, wobei die Empfangskomponente Energie drahtlos von der Versorgungsquelle durch elektromagnetische Feldkopplung empfängt, wobei die Empfangskomponente mindestens einen Induktor umfasst.

12. Verfahren nach Anspruch 10 oder Anspruch 11, ferner umfassend:
Zuführen von durch elektromagnetische Feldkopplung empfangener Energie zu mindestens einer Komponente des elektrischen Geräts; und
Zuführen von Energie zu mindestens einer Komponente des elektrischen Geräts aus einer wiederaufladbaren Batterie, wenn an der Empfangskomponente keine Energie von der Versorgungsquelle empfangen wird.

13. Vorrichtung (200) zum drahtlosen Empfangen von Energie von einer Versorgungsquelle (110) durch elektromagnetische Feldkopplung, wobei die Vorrichtung umfasst:
eine Überwachungsschaltungsanordnung (230), die dazu konfiguriert ist, eine Resonanzfrequenz der Versorgungsquelle zu überwachen und ein Steuersignal auszugeben;
Berechnen der Resonanzfrequenz der Versorgungsquelle auf Grundlage des Steuersignals;
eine Empfangskomponente (211a), die ausgebildet ist, um Energie drahtlos von der Versorgungsquelle zu empfangen; und
eine Steuereinheit (216), die dazu konfiguriert ist, eine Resonanzfrequenz der Empfangskomponente in Abhängigkeit von dem Steuersignal von der Überwachungsschaltungsanordnung zu variieren, um die Resonanzfrequenz der Empfangskomponente an die berechnete Resonanzfrequenz der Versorgungsquelle anzupassen.

14. Vorrichtung (100) zum drahtlosen Zuführen von Energie zu einem elektronischen Gerät (200) durch elektromagnetische Feldkopplung, wobei die Vorrichtung Mittel umfasst zum:
Empfangen, von dem elektronischen Gerät, eines Steuersignals, wobei das Steuersignal die Resonanzfrequenz des elektronischen Geräts umfasst; und
adaptiven Variieren, gemäß der Resonanzfrequenz eines elektronischen Geräts, einer Resonanzfrequenz der Vorrichtung, um mit der Resonanzfrequenz des elektronischen Geräts übereinzustimmen.

## Revendications

1. Appareil (200) pour recevoir de l'énergie sans fil d'une source d'alimentation (110) par couplage par champ électromagnétique, l'appareil comprenant :
un composant de réception adapté pour recevoir de l'énergie sans fil de la source d'alimentation par couplage par champ électromagnétique ; et
des moyens configurés pour :
surveiller une fréquence de résonance d'une source d'alimentation et délivrer un signal de commande ;
calculer la fréquence de résonance de la source d'alimentation sur la base du signal de commande ; et
faire varier une fréquence de résonance du composant de réception en fonction du signal de commande pour faire correspondre la fréquence de résonance dudit composant de réception à la fréquence de résonance calculée de ladite source d'alimentation.

2. Appareil selon la revendication 1, dans lequel le composant de réception comprend au moins un inducteur.

3. Appareil selon la revendication 1 ou la revendication 2, dans lequel les moyens configurés pour surveiller la fréquence de résonance de la source d'alimentation comprennent une bobine de mesure.

4. Appareil selon l'une quelconque des revendications précédentes, dans lequel les moyens configurés pour surveiller et calculer la fréquence de résonance de la source d'alimentation comprennent un circuit à boucle à verrouillage de phase (PLL).

5. Appareil selon l'une quelconque des revendications précédentes, dans lequel l'appareil comprend un dispositif électronique portable, tel qu'un téléphone mobile, un assistant numérique personnel, PDA, ou un ordinateur portable.

6. Appareil selon l'une quelconque des revendications précédentes, dans lequel le composant de réception est configuré pour fournir l'énergie électrique reçue à une batterie rechargeable.

7. Appareil selon l'une quelconque des revendications précédentes, dans lequel l'appareil comprend en outre une pluralité de composants électriques, et l'appareil est configuré pour fournir de l'énergie électrique à au moins l'un de ces composants électriques.

8. Appareil selon la revendication 7, comprenant en outre une batterie pour fournir de l'énergie électrique à au moins l'un des composants électriques lorsque de l'énergie n'est pas reçue de la source d'alimentation.

9. Appareil selon l'une quelconque des revendications précédentes, dans lequel le composant de réception comprend un composant de réception adaptatif ayant une fréquence de résonance variable.

10. Procédé pour recevoir de l'énergie sans fil, par un dispositif électrique, à partir d'une source d'alimentation par couplage par champ électromagnétique, le procédé comprenant :
la surveillance (S2), par le dispositif électrique, d'une fréquence de résonance de la source d'alimentation et la délivrance d'un signal de commande ;
le calcul de la fréquence de résonance de la source d'alimentation sur la base du signal de commande ; et
la variation (S3), par le dispositif électrique, d'une fréquence de résonance d'un composant de réception du dispositif électrique en fonction du signal de commande pour faire correspondre la fréquence de résonance dudit composant de réception à la fréquence de résonance calculée de ladite source d'alimentation.

11. Procédé selon la revendication 10, dans lequel le composant de réception reçoit de l'énergie sans fil de la source d'alimentation par couplage par champ électromagnétique, le composant de réception comprenant au moins un inducteur.

12. Procédé selon la revendication 10 ou la revendication 11, comprenant en outre :
la fourniture d'énergie reçue par couplage par champ électromagnétique à au moins un composant du dispositif électrique ; et
la fourniture d'énergie à au moins un composant du dispositif électrique à partir d'une batterie rechargeable lorsque de l'énergie n'est pas reçue au niveau du composant de réception à partir de la source d'alimentation.

13. Appareil (200) pour recevoir de l'énergie sans fil d'une source d'alimentation (110) par couplage par champ électromagnétique, l'appareil comprenant :
une circuiterie de surveillance (230) configurée pour surveiller une fréquence de résonance de la source d'alimentation et pour délivrer un signal de commande ;
le calcul de la fréquence de résonance de la source d'alimentation sur la base du signal de commande ;
un composant de réception (211a) adapté pour recevoir de l'énergie sans fil de la source d'alimentation ; et
une unité de commande (216) configurée pour faire varier une fréquence de résonance dudit composant de réception en fonction du signal de commande provenant de ladite circuiterie de surveillance pour faire correspondre la fréquence de résonance dudit composant de réception à la fréquence de résonance calculée de ladite source d'alimentation.

14. Appareil (100) pour fournir de l'énergie sans fil à un dispositif électronique (200) par couplage par champ électromagnétique, l'appareil comprenant des moyens pour :
recevoir, à partir du dispositif électronique, un signal de commande, dans lequel le signal de commande comprend la fréquence de résonance du dispositif électronique ; et
faire varier de manière adaptative, en fonction de la fréquence de résonance d'un dispositif électronique, une fréquence de résonance de l'appareil pour correspondre à la fréquence de résonance du dispositif électronique.
